# EUROPÄISCHE PATENTANMELDUNG

(11) **EP 4 215 579 A1**
(43) Veröffentlichungstag der Anmeldung: **26.07.2023**
(21) Anmeldenummer: 22152496.0
(22) Anmeldetag: 20.01.2022
(51) Int. Cl.: C08L 21/00, B01F 35/00

(54) **VERFAHREN UND VORRICHTUNG ZUR HERSTELLUNG EINER RUSSMISCHUNG FÜR FAHRZEUGREIFEN SOWIE FAHRZEUGREIFEN MIT EINER SOLCHEN RUSSMISCHUNG**

(71) Anmelder: Continental Reifen Deutschland GmbH, 30165 Hannover (DE)
(72) Erfinder: Dettmer, Fabian, 30165 Hannover (DE); Lies, Alexander, 30165 Hannover (DE); Pereira, Armando, 30165 Hannover (DE); Sharifi, Monir, 30165 Hannover (DE); Wahl, Günter, 30165 Hannover (DE); Wei, Jianping, 30165 Hannover (DE)
(74) Vertreter: Continental Corporation

(57) **Zusammenfassung**

Die Erfindung betrifft ein Verfahren zur Herstellung einer Rußmischung für Fahrzeugreifen, umfassend zumindest die folgenden Schritte: i) Bereitstellen einer Rußmischung oder Mischen von mindestens zwei Bestandteilen ausgewählt aus der Gruppe bestehend aus Polymeren, Füllstoffe, Weichmacher und Alterungsschutzmittel, um eine Rußmischung zu erhalten, ii) Erwärmen der Rußmischung auf eine maximale Temperatur von 140 °C und iii) Erwärmen der Rußmischung auf eine Auswurftemperatur von mindestens 150 °C. Ferner betrifft die Erfindung eine Rußmischung für einen Fahrzeugreifen, erhältlich durch das beschriebene Verfahren, einen Fahrzeugreifen mit einer solchen Rußmischung sowie eine Vorrichtung zur Herstellung einer Rußmischung.

## Beschreibung

Die Erfindung betrifft ein Verfahren zur Herstellung einer Rußmischung für Fahrzeugreifen gemäß dem Oberbegriff des Patentanspruchs 1, eine Vorrichtung gemäß dem Oberbegriff des Patentanspruchs 9 und ferner einen Fahrzeugreifen enthaltend eine solche Rußmischung gemäß dem Oberbegriff des Patentanspruchs 10.

Für die Herstellung von Fahrzeugreifen sind Mischprozesse ein wesentlicher Verfahrensschritt und finden sich üblicherweise in Innenmischern für das Einmischen, für die Verteilung und die Dispersion aller Bestandteile in die gewünschte Kautschukmischung wieder. Unterschiedliche Vorrichtungen zum Mischen werden je nach Anforderung an die Menge des Silicas oder des Rußes in Abhängigkeit der Temperatur und der Mischzeit eingesetzt. Dabei können eine Vielzahl unterschiedlicher Mischschritte den Prozess und damit die Eigenschaften der Mischung und letztendlich des Fahrzeugreifenprofils beeinflussen.

Die Qualität des nicht geheizten Fahrzeugreifenprofils hängt dabei maßgeblich von seiner Porosität ab. Der Einsatz von Rußverbindungen in Fahrzeugprofilen ist derzeit bekannt, wie auch die auftretende Porosität in den nicht geheizten Profilen, die mit diesen einhergehen. Weisen solche Fahrzeugreifenprofile, insbesondere Laufflächenprofile, eine zu große Porosität auf, so werden die Profilgeometrien und das Gewicht ungenau oder inkonsistent, wobei dies zu Produktionseinschränkungen führen kann. Um die heutigen Qualitätsanforderungen von Fahrzeugreifenprofilen mit Rußverbindungen erfüllen zu können, ist die Entwicklung verbesserter Mischverfahren zur Herstellung solche Fahrzeugprofile unerlässlich.

Hier setzt die vorliegende Erfindung an. Ausgehend von der beschriebenen Problematik ist es die Aufgabe der Erfindung ein Verfahren zur Herstellung einer Rußmischung für Fahrzeugreifen bereitzustellen, durch das die Eigenschaften von Rußmischungen, insbesondere die Porosität von nicht geheizten Fahrzeugreifenprofilen, verbessert wird. Ferner ist es die Aufgabe der Erfindung eine Vorrichtung für die Herstellung einer solchen Rußmischung bereitzustellen, durch die verbesserte Fahrzeugprofile herstellbar sind, insbesondere mit einer verbesserten Porosität von nicht geheizten Fahrzeugreifenprofilen. Weiterhin ist es die Aufgabe der vorliegenden Erfindung einen Fahrzeugreifen bereitzustellen, der verbesserte Eigenschaften aufweist.

Gelöst wird die Aufgabe der Erfindung durch ein Verfahren zur Herstellung einer Rußmischung für Fahrzeugreifen, gemäß der Merkmale des Anspruchs 1. Außerdem wird die Aufgabe der Erfindung durch eine Vorrichtung zur Herstellung einer Rußmischung mit den Merkmalen des Anspruchs 9 und einen Fahrzeugreifen enthaltend eine Rußmischung gemäß der Merkmale des Anspruchs 10 gelöst.

Gelöst wird die Erfindung durch ein Verfahren zur Herstellung einer Rußmischung für Fahrzeugreifen, umfassend zumindest folgende Schritte:
i) Bereitstellen einer Rußmischung oder Mischen von mindestens zwei Bestandteilen ausgewählt aus der Gruppe aus Polymeren, Füllstoffe, Weichmacher und Alterungsschutzmittel, um eine Rußmischung zu erhalten,
ii) Erwärmen der Rußmischung auf eine maximale Temperatur von 140 °C und
iii) Erwärmen der Rußmischung auf eine Auswurftemperatur von mindestens 150 °C.

Im Zuge eigener Arbeiten hat sich herausgestellt, dass die Eigenschaften von Rußmischungen, die durch das erfindungsgemäße Verfahren hergestellt werden, deutlich bessere Eigenschaften in Bezug auf die Porosität der nicht geheizten Profile aufzeigen. Vorteilhaft ist, dass flüchtige Bestandteile und/oder Wasser durch das Erwärmen in Schritt ii) ausgetrieben werden können, wodurch der Prozess des Erwärmens im Anschluss in Schritt iii) letztendlich zu besseren Werten bezüglich der Porosität führt. Das Austreiben sollte im Schritt ii) nicht die Auswurftemperatur von 150 °C erreichen, da die flüchtigen Bestandteile und/oder Wasser lediglich bis maximal 140 °C erfolgreich ausgetrieben werden.

Als flüchtige Bestandteile werden im Sinne der Erfindung Bestandteile verstanden, die im ersten Schritt des Erwärmens auf bis zu 140 °C in den gasförmigen Zustand übergehen. Diese können beispielsweise flüchtige organische Stickstoffverbindungen, wie Amine insbesondere N-Heterozyklen und/oder Kohlenwasserstoffe, wie aromatische Ketone, und/oder Ethanol sein.

In einer bevorzugten Ausführungsform der Erfindung erfolgt das Erwärmen in Schritt ii) für mindestens 30 Sekunden. Es hat sich vorteilhafterweise herausgestellt, dass das Erwärmen von mindestens 30 Sekunden besonders geeignet ist, da das Austreiben von flüchtigen Bestandteilen und/oder Wasser zu deutlich besseren Werten bezüglich der Porosität in Rußmischungen führt. Besonders bevorzugt erfolgt das Erwärmen im Bereich von 30 bis 180 Sekunden und ganz besonders bevorzugt im Bereich von 60 bis 180 Sekunden. Der Bereich ist von Vorteil, da das Austreiben von flüchtigen Bestandteilen und/oder Wasser im Wesentlichen in diesem Zeitfenster erfolgt. Ein Austreiben größer als 180 Sekunden führt nicht mehr zu nennenswerten Verbesserungen hinsichtlich der Porosität von Rußmischungen.

In einer weiteren bevorzugten Ausführungsform erfolgt das Erwärmen in Schritt ii) so lange, bis flüchtige Bestandteile der Rußmischung und/oder Wasser im Wesentlichen ausgetrieben sind. Im Wesentlichen bedeutet im Sinne der Erfindung, dass noch eine geringe Menge an flüchtigen Bestandteilen zurückbleiben kann. Dazu ist denkbar, dass beispielsweise maximal 0,002 Gew.-%, bevorzugt maximal 0,001 Gew.-%, besonders bevorzugt maximal 0,0003 Gew.-%, der flüchtigen Bestandteile und/oder Wasser nach dem Austreiben noch nicht ausgetrieben sind. Vorteilhaft ist, dass durch das Austreiben der flüchtigen Bestandteile und/oder Wasser die Porosität der Rußmischung insgesamt abnimmt.

In einer weiteren bevorzugten Ausführungsform wird die Rußmischung während des Erwärmens in Schritt ii) und/oder in Schritt iii) zusätzlich gerührt. Ein Rühren der Maße ist vorteilhaft, da diese gleichmäßig erwärmt wird und das Austreiben von flüchtigen Bestandteilen und/oder Wasser gleichmäßiger erfolgen kann. Durch das Rühren entstehen deutlich weniger "Hot-Spots", in denen flüchtige Bestandteile und/oder Wasser zurückbleiben können.

Weiter bevorzugt erfolgt der Schritt iii) unmittelbar nach Schritt ii). Ein Erwärmen auf die Auswurftemperatur von mindestens 150 °C erfolgt bevorzugt direkt im Anschluss nach dem Austreiben der flüchtigen Bestandteile und/oder Wasser, damit keine anderen Bestandteile durch das Abkühlen in die Rußmischung gelangen. Ein Erwärmen direkt im Anschluss führt vorteilhaft zu einer deutlich besseren Porosität der Rußmischung.

Ferner bevorzugt wird die Rußmischung im Anschluss von Schritt iii) einer Wartezeit ausgesetzt. Die Wartezeit erfolgt im Anschluss nach Erreichen der Auswurftemperatur und dient vorteilhaft dem Abkühlen der Rußmischung. Es hat sich herausgestellt, dass die gesamte Prozesstemperatur durch eine solche Wartezeit und einem einhergehenden Abkühlen stabilisiert werden kann. Die Wartezeit beträgt in einer besonders bevorzugten Ausführungsform mindestens eine Stunde.

Weiterhin bevorzugt wird die Rußmischung in einem Schritt iv) mit weiteren Bestandteilen ausgewählt aus der Gruppe aus Vernetzungschemikalien vermischt. Vernetzungschemikalien sind beispielsweise gängige Beschleuniger, Verzögerer und/oder Schwefel. Üblicherweise wird die Rußmischung in diesem Schritt auf maximal 130 °C erwärmt, sodass die Rußmischung in Verbindung mit dem Schritt ii) des Erwärmens zum Austreiben flüchtiger Bestandteile und/oder Wasser vorteilhafterweise eine verringerte Porosität aufweist.

In einer weiteren bevorzugten Ausführungsform der Erfindung wird die Rußmischung im Anschluss extrudiert. Dies erfolgt üblicherweise im Bereich von 120 bis 140 °C. Ein Extrudieren der Rußmischung ist von Vorteil, da die Maße homogenisiert wird und in die gewünschte Form gebracht werden kann. Entsprechend können Formteile mit deutlich weniger Porosität hergestellt werden. Weiter vorteilhaft ist, dass die Rußmischung aufgrund der geringeren Porosität schneller extrudiert werden kann, sodass Verweilzeit im Extruder verkürzbar ist.

Ferner wird die Aufgabe der Erfindung durch eine Rußmischung für einen Fahrzeugreifen gelöst, die erhältlich durch ein vorherig beschriebenes Verfahren ist. Eine solche Rußmischung weist vorteilhaft wesentlich verbesserte Eigenschaften bezüglich der Porosität auf. Die so hergestellten Rußmischungen können bevorzugt für Reifenprofile mit einer Dicke von größer als 5 mm eingesetzt werden.

In einer bevorzugten Ausführungsform weist die beschriebene Rußmischung eine Porosität auf, die geringer als 3,0 Vol-% ist. Bevorzugt ist die Porosität geringer als 1,0 Vol-%, besonders bevorzugt geringer als 0,5 Vol-%. Denkbar ist ebenfalls, dass die Porosität im Bereich von 0,1 Vol-% bis 0,8 Vol-% liegt. Vorteilhaft ist, dass durch das Austreiben der flüchtigen Bestandteile und/oder Wasser die Porosität der Rußmischung insgesamt abnimmt.

Weiterhin wird die Aufgabe der Erfindung durch eine Vorrichtung zur Herstellung einer Rußmischung, wobei die Rußmischung durch ein beschriebenes Verfahren hergestellt wird, wobei die Vorrichtung zumindest eine Mischkammer umfasst, in der die Rußmischung vermischt wird, wobei die Vorrichtung mindestens eine Regelungseinheit zur Regelung der Temperatur in der zumindest einen Mischkammer aufweist, wobei die Rußmischung in einem ersten Schritt für mindestens 30 Sekunden auf eine maximale Temperatur von 140 °C und in einem zweiten Schritt auf eine Auswurftemperatur von mindestens 150 °C erwärmt wird. Die erfindungsgemäße Vorrichtung regelt das Mischen einer Rußmischung und kann vorteilhafterweise somit die Eigenschaften der Rußmischung hinsichtlich der Porosität erheblich verbessern. Wesentlich ist, dass die Rußmischung in der Vorrichtung mindestens zwei Erwärmungsvorgängen unterzogen wird und diese durch die mindeste eine Regelungseinheit gesteuert werden. Das Austreiben flüchtiger Bestandteile und/oder erfolgt in einem ersten Erwärmen, wobei die Temperatur von 140 °C nicht überschritten werden darf. Die Temperatur wird hierbei für mindestens 30 Sekunden gehalten, um den Austreibungsvorgang zu ermöglichen. Anschließend wird die Rußmischung in einem zweiten Schritt auf mindestens 150 °C erwärmt.

In einer bevorzugten Ausführungsform der Erfindung weist die Vorrichtung eine Mischeinheit auf, die in der Mischkammer angeordnet ist. Dadurch wird die Rußmischung während des Erwärmens dauerhaft vermischt, sodass die zu einstellende Temperatur im Wesentlichen homogen in der Rußmischung vorliegt. Das Austreiben flüchtiger Bestandteile und/oder Wasser erfolgt dadurch deutlich effizienter.

Weiterhin bevorzugt weist die Vorrichtung mindestens zwei Mischkammern auf, die miteinander verbunden sind, wobei der erste Erwärmungsschritt in der ersten Mischkammer erfolgt und der zweite Erwärmungsschritt in der zweiten Mischkammer. Vorteilhafterweise kann die Rußmischung somit in einem kontinuierlichen Durchlauf gemischt werden und im Zuge dessen die flüchtigen Bestandteile und/oder Wasser effizient ausgetrieben werden.

Denkbar ist, dass die Vorrichtung eine Einheit aufweist, die einen Unterdruck in der zumindest einen Mischkammer erzeugen kann. Vorteilhafterweise können die flüchtigen Bestandteile und/oder das Wasser noch effizienter ausgetrieben werden.

Ferner ist denkbar, dass die Vorrichtung eine Ansaugeinrichtung aufweist, die die ausgetriebenen flüchtigen Bestandteile und/oder das Wasser ansaugen kann. Dadurch können die sich in der Mischkammer befindlichen gasförmigen flüchtigen Bestandteile und/oder das Wasser aus der Mischkammer entfernt werden. Vorteilhafterweise können sich die ausgetriebenen Bestandteile somit nicht mehr in die Rußmischung einlagern, wodurch die Eigenschaften der Rußmischung hinsichtlich der Porosität deutlich verbessert werden.

Weiterhin betrifft die Erfindung einen Fahrzeugreifen enthaltend eine nach dem beschriebenen Verfahren herstellbare Rußmischung oder eine Rußmischung, die eine Rußmischung enthält, die erhältlich durch ein beschriebenes Verfahren ist. Fahrzeugreifen mit einer solchen Rußmischung zeigen verbesserte Eigenschaften hinsichtlich der Porosität auf. Außerdem wird die Produktion von Fahrzeugreifenprofilen für die Fahrzeugreifen enthaltend solche Rußmischungen verbessert, da die Fahrzeugreifenprofile weniger Schwankungen hinsichtlich des Gewichts aufzeigen und die Qualität der Profile erhöht wird.

Weitere Vorteile und Merkmale des erfindungsgemäßen Verfahrens sowie der Vorrichtung ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar.

Experimentelle Beispiele:
In Tabelle 1 sind die Herstellungsparameter sowie die Porositätswerte von vier identischen Mischungen dargestellt. Alle Mischungen wurden in einem Laborinnenmischer hergestellt und nach der Grundstufe 7 Tage gelagert. Die Mischung 1 wurde im zweiten erfindungsgemäßen Schritt ii) auf 130 °C für 30 Sekunden erwärmt, um flüchtige Bestandteile auszutreiben. In einem dritten Schritt iii) auf 150 °C erwärmt und anschließend ausgeworfen. Die Mischung 2 wurde im zweiten erfindungsgemäßen Schritt ii) auf 130 °C für 60 Sekunden erwärmt. In einem dritten Schritt iii) wurde diese auf 150 °C erwärmt und anschließend ausgeworfen. Die Mischung 3 wurde im zweiten erfindungsgemäßen Schritt ii) auf 130 °C für 120 Sekunden erwärmt und in einem dritten Schritt iii) auf 150 °C erwärmt sowie ausgeworfen. Alle vier Mischungen wurden im Anschluss in einem Innenmischer mit Vulkanisationschemikalien fertig gemischt.

Die Porositätswerte der drei Mischungen 1, 2 und 3 sind deutlich geringer als in der Referenz, der Mischung, die ohne den erfindungsgemäßen Prozess herkömmlich hergestellt wurde.

**Tabelle 1: Experimentelle Daten**

| | Referenz | 1 | 2 | 3 |
|---|---|---|---|---|
| | | | | |
| Schritt ii) | -- | 130 °C, 30 s | 130 °C, 60 s | 130 °C, 120 s |
| Schritt iii) | -- | 150 °C | 150 °C | 150 °C |
| Porosität / Vol-% | 11,13 | 0,4 | 0,62 | 0,48 |

Messmethode Porosität:
Die Porosität der finalen Mischung wird aus der Abnahme der Dichte in der Mischung ermittelt. Dazu wird die Mischung in einem Ofen für 30 Minuten bei 115 °C erhitzt und die Porosität in Abhängigkeit der Abnahme der Dichte ermittelt.

## Patentansprüche

1. Verfahren zur Herstellung einer Rußmischung für Fahrzeugreifen, umfassend zumindest die folgenden Schritte:
i) Bereitstellen einer Rußmischung oder Mischen von mindestens zwei Bestandteilen ausgewählt aus der Gruppe bestehend aus Polymeren, Füllstoffe, Weichmacher und Alterungsschutzmittel, um eine Rußmischung zu erhalten,
ii) Erwärmen der Rußmischung auf eine maximale Temperatur von 140 °C und
iii) Erwärmen der Rußmischung auf eine Auswurftemperatur von mindestens 150 °C.

2. Verfahren nach Anspruch 1, **dadurch gekennzeichnet, dass** das Erwärmen in Schritt ii) im Temperaturbereich von 120 bis 140 °C, insbesondere im Bereich von 130 bis 140 °C, erfolgt.

3. Verfahren nach Anspruch 1 oder 2, **dadurch gekennzeichnet, dass** das Erwärmen in Schritt ii) für mindestens 30 Sekunden, bevorzugt im Bereich von 30 bis 180 Sekunden, ganz besonders bevorzugt im Bereich von 60 bis 180 Sekunden, erfolgt.

4. Verfahren nach einem der vorherigen Ansprüche, **dadurch gekennzeichnet, dass** das Erwärmen in Schritt ii) so lange erfolgt, bis flüchtige Bestandteile der Rußmischung und/oder Wasser im Wesentlichen ausgetrieben sind.

5. Verfahren nach einem der vorherigen Ansprüche, **dadurch gekennzeichnet, dass** der Schritt iii) unmittelbar nach Schritt ii) erfolgt.

6. Verfahren nach einem der vorherigen Ansprüche, **dadurch gekennzeichnet, dass** die Rußmischung in einem Schritt iv) mit weiteren Bestandteilen ausgewählt aus der Gruppe aus Vernetzungschemikalien, insbesondere mindestens eines ausgewählt aus der Gruppe bestehend aus Beschleuniger, Verzögerer und Schwefel, vermischt wird.

7. Verfahren nach einem der vorherigen Ansprüche, **dadurch gekennzeichnet, dass** die Rußmischung im Anschluss extrudiert wird, insbesondere im Bereich von 120 bis 140 °C.

8. Rußmischung für einen Fahrzeugreifen, wobei die Rußmischung erhältlich durch ein Verfahren nach einem der vorherigen Ansprüche ist.

9. Vorrichtung zur Herstellung einer Rußmischung, wobei die Rußmischung durch ein Verfahren nach einem der Ansprüche 1 bis 7 hergestellt wird, wobei die Vorrichtung zumindest eine Mischkammer umfasst, in der die Rußmischung vermischt wird,
**dadurch gekennzeichnet, dass**
die Vorrichtung mindestens eine Regelungseinheit zur Regelung der Temperatur in der zumindest einen Mischkammer aufweist, wobei die Rußmischung in einem ersten Schritt für mindestens 30 Sekunden auf eine maximale Temperatur von 140 °C und in einem zweiten Schritt auf eine Auswurftemperatur von mindestens 150 °C erwärmt wird.

10. Fahrzeugreifen enthaltend eine Rußmischung hergestellt durch ein Verfahren nach einem der Ansprüche 1 bis 7.
